# EUROPEAN PATENT SPECIFICATION

(11) **EP 2 086 038 B1**
(45) Date of publication and mention of the grant of the patent: **20.11.2013**
(21) Application number: 09151731.8
(22) Date of filing: 30.01.2009
(51) Int. Cl.: H01M 4/48, H01M 10/52

(54) **Solid State Battery**
Festkörperbatterie
Batterie à électrolyte solide

(30) Priority: 31.01.2008 JP 2008022171
(43) Date of publication of application: 05.08.2009
(73) Proprietor: Ohara Inc., Sagamihara-shi Kanagawa 229-1186 (JP)
(72) Inventor: Kato, Takashi, Kanagawa 229-1186 (JP)
(74) Representative: von Kreisler Selting Werner

(56) References cited:
- EP-A- 1 760 819
- WO-A-2004/036669
- US-A1- 2007 175 020
- US-B1- 6 315 881
- HAILONG CHEN, XINPING QIU, WENTAO ZHU, PAUL HAGENMULLER: "Synthesis and high rate properties of nanoparticled lithium cobalt oxides as the cathode material for lithium-ion battery", ELECTROCHEMISTRY COMMUNICATIONS, vol. 4, 2002, pages 488-491,

## Description

The present invention relates to a solid state battery. More specifically, the present invention relates to a solid state battery in which a solid electrolyte is arranged between a positive electrode containing an active material and a negative electrode containing an active material.

Recently, handheld electronic devices such as mobile phone and the like have been improved for higher performance and smaller size such that higher energy density and smaller size of batteries used in the handheld electronic devices are desired. In general, a lithium battery can provide a high voltage and achieve a high energy density so as to be expected to be utilized as the power source for such handheld electronic devices. In such lithium battery, lithium transition metal complex oxide such as lithium cobaltate (LiCoO₂), lithium manganate (LiMn₂O₄), lithium nickelate (LiNiO₂), etc., is generally used as a positive electrode active material. As a negative electrode active material, a carbon material such as graphite, fibrous carbon, and so on is used. An organic electrolyte solution is generally used in such lithium battery, and a polymer electrolyte, in which a macromolecular electrolyte and an organic electrolyte solution are mixed, is also being investigated. Since a liquid electrolyte is used in such lithium battery or polymer electrolyte battery, leakage and ignition of the liquid electrolyte can be caused such that the reliability of the battery is low. Also, since the battery performance may be drastically lowered if electrolyte solution freezes at a low temperature or vapors at a high temperature, an operating temperature range of the battery is limited. Therefore, the research and development of the lithium battery as a highly reliable battery using a solid electrolyte having a lithium ion conductive property instead of the organic electrolyte solution is being desired.

For example, Japanese patent application publication No. 08-195219 discloses a battery with a high service rate of its active material by reducing the impedance of the electrode since a mixture of active material powder and solid electrolyte powder is utilized as the electrode. With a lithium battery made of a nonflammable solid, unlike a conventional battery using an organic electrolyte solution, it is difficult to establish ideal electrical contact of a positive electrode layer, a solid electrolyte layer, and a negative electrode layer. Although a positive electrode, a solid electrolyte, and a negative electrode are joined by pressure molding in Japanese patent application publication No. H09-35724, electrical contact of the solid electrolyte layer and the electrode layers is not adequate with this method and degradation of capacity may occur at a comparatively low number of cycles.

Thus, Japanese patent application publication No. 2001-126758 discloses a lithium battery, in which a solid electrolyte layer containing solid electrolyte bound with glass having a low melting point is arranged between electrode layers formed of active material bound with glass having a low melting point and mixture layers formed of mixture powder of active material and solid electrolyte bound with glass having a low melting point are arranged between the electrode layers and the solid electrolyte layer.

EP 1 760 819 discloses a solid electrolyte for a lithium ion secondary battery having a laminate of at least two layers. The thickest layer of the laminate comprises lithium ion conductive crystalline, preferably lithium ion conductive glass-ceramics having a predominant layer of Li_{1+x+y}(Al, GA)ₓ(Ti, Ge)₂₋ₓSi_{y}P₃₋yO₁₂ where 0≤x≤1, 0≤y≤1. In a preferred embodiment, thickness of an electrolyte layer comprising the lithium ion conductive glass-ceramics is 150 µm or below and thickness of an electrolyte layer which does not contain lithium ion conducive glass-ceramics or contains only a small amount of lithium ion conductive glass-ceramics is 50 ≤ m or below.

WO 2004/036669 A2 discloses ionically conductive composites for protection of active metal anodes and methods for their fabrication. The composites may be incorporated in active metal negative electrode (anode) structures and battery cells. In accordance with the invention, the properties of different ionic conductors are combined in a composite material that has the desired properties of high overall ionic conductivity and chemical stability towards the anode, the cathode and ambient conditions encountered in battery manufacturing. The composite is capable of protecting an active metal anode from deleterious reaction with other battery components or ambient conditions while providing a high level of ionic conductivity to facilitate manufacture and/or enhance performance of a battery cell in which the composite is incorporated.

US 2007/0175020 discloses a method for producing a solid state battery including the steps of (a) obtaining an active material slurry; (b) obtaining a solid electrolyte slurry; (c) obtaining a current collector slurry; (d) forming an active material green sheet and a solid electrolyte green sheet; (e) laminating the solid electrolyte green sheet on one surface of the active material green sheet to form a first green sheet group, and forming a current collector green sheet layer on the other surface of the active material green sheet to form a second green sheet group; (f) heating the second green sheet group at not less than 200 °C and not greater than 400 °C in an oxidizing atmosphere; and (g) baking the second green sheet group having heated in the step (f) in a low oxygen atmosphere at a baking temperature higher than the heating temperature in the step (f) to obtain a laminate.

HAILONG CHEN et al. (ELECTROCHEMISTRY COMMUNICATIONS, vol. 4, 2002, pages 488 - 491) discloses nanoparticled lithium cobalt oxides were synthesized by coprecipitation in ethanol. Mechanical stirring was used to control the particle growth. The controlled grain size was below **100 nm with a narrow distribution. The structure has been examined using X-ray diffraction. On hand of an experimental cell it appears that the novel material has an exciting high charge and discharge rate; the capacity is 100 mA h/g for a 50 C rate and 130 mA h/g for a 10 C rate.**

However, because the mixed layers are disposed anew at the interfaces of the electrodes and the electrolyte, a manufacturing process is made complex and productivity is lowered. Although baking may be performed upon applying a compressive force to the electrodes and the electrolyte to improve affinity of the interfaces of the electrode layers and the solid electrolyte layer, depending on baking conditions, the electrode active materials and the solid electrolyte may undergo unfavorable reactions in the baking process.

In view of such issues, the present invention can provide a solid state battery in which a solid electrolyte is interposed between a positive electrode, containing an active material, and a negative electrode, containing an active material, and either or both of the positive electrode and negative electrode substances contain a metal oxide, characterized in that: the metal oxide is a compound composed of oxygen and at least one component selected from the group of Co, Ni, Mn, Nb and Si; and the metal oxide has an average particle diameter of not more than 0.3 µm.

Further features of the present invention, its nature, and various advantages will be more apparent from the accompanying drawings and the following description of the preferred embodiment.

### BRIEF DESCRIPTION OF THE DRAWINGS

FIG. 1 is a schematic section view of a solid state battery according to an embodiment of the present invention.
FIG. 2 is a schematic section view of a solid state battery according to another embodiment of the present invention.
FIG. 3 illustrates example processes of manufacturing a solid state battery assembly according to an embodiment of the present invention.

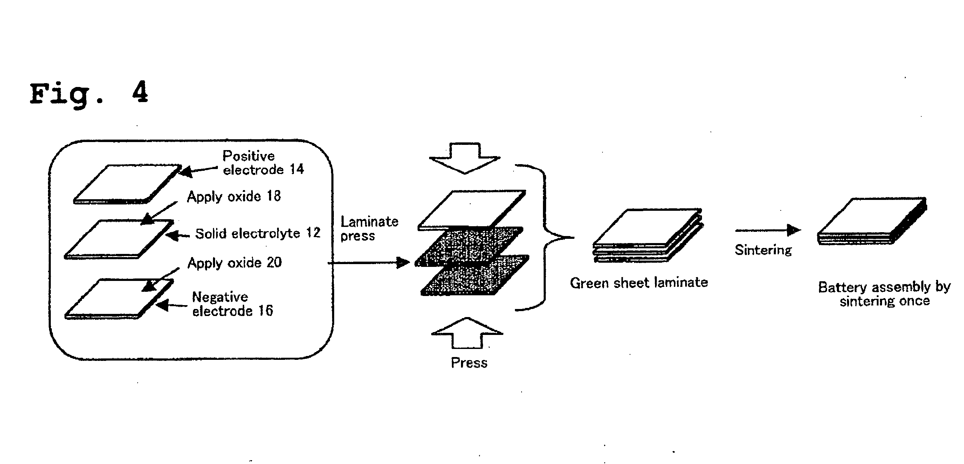

FIG. 4 illustrates example processes of manufacturing a solid state battery assembly according to another embodiment of the present invention.

Although an embodiment of the present invention will be described in detail with reference to the drawings, the following description is provided to describe the embodiment of the present invention, and the present invention is not limited to the embodiment. And the same or related symbols are used to refer to the same or same kind of element and redundant description is omitted.

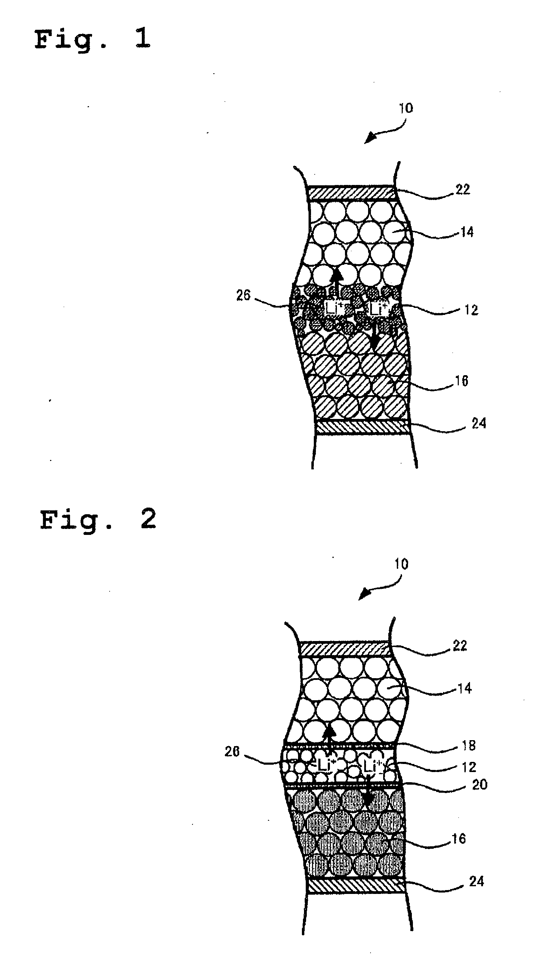

FIG. 1 is a schematic section view of a solid state battery 10 according to an embodiment of the present invention. Across a layer constituted of solid electrolyte 12, a positive electrode 14 is disposed on an upper side and a negative electrode 16 is disposed on a lower side. Also, an aluminum foil is disposed as a current collector 22 on an upper side of the positive electrode, and a copper foil is disposed as a current collector 24 on a lower side of the negative electrode.

### [Solid electrolyte]

It is preferable that the solid electrolyte 12 disposed between the positive electrode 14 and the negative electrode 16 is so thin that high output can be obtained because a transfer distance of lithium ions can be short and an electrode area per unit volume can be large. For example, the thickness of the layer of solid electrolyte 12 is preferably not exceeding 200µm, more preferably not exceeding 180µm, and most preferably not exceeding 150µm.

A performance of the solid state battery according to this embodiment depends on a lithium ion conductivity and a lithium ion transference number of the electrolyte. Thus, it is preferable that the solid electrolyte comprises substance having high lithium ion conductivity in the present invention.

The ion conductivity of lithium ion conductive crystal is preferably at least 1×10⁻⁴S·cm⁻¹, more preferably at least than 5×10⁻⁴S·cm⁻¹, and most preferably at least 1×10⁻³S·cm⁻¹.

A lithium ion conductive inorganic powder to be employed in the present embodiment, for example, may comprise: a lithium ion conductive glass powder, a lithium ion conductive crystal (ceramic or glass ceramic) powder, or an inorganic substance powder containing a mixture powder thereof. It is preferable that the lithium ion conductive inorganic powder contains lithium, silicon, phosphorus, and titanium as main components in order to obtain a high lithium ion conductive property.

It is preferable that the solid electrolyte contains at least 50 wt% of lithium ion conductive crystals because the conductivity thereof may become higher by containing more of these lithium ion conductive crystals. The content thereof is more preferably at least 55wt%, and most preferably at least 60wt%.

The lithium ion conductive inorganic powder preferably contains at least 50 wt% of the lithium ion conductive crystals because the conductivity thereof may become higher by containing more of these lithium ion conductive crystals. The content thereof is more preferably at least 55 wt% and most preferably at least 60 wt%.

Here, as the lithium ion conductive crystals to be used, crystals having a perovskite structure with a lithium ion conductive property such as LiN, LISICON, La_{0.55}Li_{0.35}TiO₃, etc., which have advantages in the ion conductivity if no crystal gain boundaries are included, crystals having NASICON type structure such as LiTi₂P₃O₁₂, or glass ceramics having such crystals precipitated may be utilized. As preferable lithium ion conductive crystals, for example, crystals of Li₁₊ₓ₊y(Al, Ga)ₓ(Ti, Ge)₂₋ₓSi_{y}P_{3-y}O₁₂ (where 0≤x≤1 and 0≤y≤1) can be used. In particular, glass ceramics, in which crystals having the NASICON structure are precipitated, are more preferable since they hardly have vacancies or crystal grain boundaries that inhibit ion conduction such that the ion conductivity thereof may be high and the chemical stability thereof is excellent.

The solid electrolyte preferably contains at least 80 wt% of the lithium ion conductive glass ceramics because the conductivity thereof may become higher by containing more of these glass ceramics. The content thereof is more preferably at least 85 wt% and most preferably at least 90 wt%.

Here, vacancies and crystal grain boundaries that inhibit ion conduction may include ion conduction inhibiting substances such as vacancies, crystal grain boundaries, and so on that decrease a conductivity of an entire inorganic substance, including the lithium ion conductive crystals, to equal to or less than 1/10th of the conductivity of lithium ion conductive crystals themselves included in the inorganic substance.

Here, the glass ceramics are materials to be obtained by heat treatment of glass such that crystal phases are precipitated in a glass phase and may include material constituted of an amorphous solid and a crystal. As long as the glass ceramics hardly have vacancies in crystals or between crystal grains, the glass ceramics may also include materials in which the entire glass phase has been changed into crystal phases, that is, the crystal amount (degree of crystallinity) in the materials has become 100 mass%. Since it is not evitable that the so-called ceramics or sintered bodies have vacancies in crystals or between crystal grains, or grain boundaries due to their manufacturing processes, it is possible to distinguish them from the glass ceramics. With respect to the ion conduction, the ion conductivity of a ceramic material is considerably decreased to be much less than that of the crystal grain itself because the vacancies and crystal grain boundaries exist in the ceramic material. With respect to the glass ceramics, it is possible to control crystallization processes thereof so as to prevent the ion conductivity between crystal grains from decreasing such that the ion conductivity of the glass ceramics may be kept in the same level of the crystal gains.

Although a single crystal structure of each of the abovementioned crystals can be used as a material other than the glass ceramics that hardly has any vacancies or crystal grain boundaries that inhibit the ion conduction, it is most preferable to use a lithium ion conductive glass ceramic or lithium ion conductive glass ceramics because it is difficult and costly to manufacture the single crystal structure.

It is preferable to use the lithium ion conductive glass ceramic in pulverized form as a lithium ion conductive inorganic powder having a high ion conductivity to be contained in the solid electrolyte layer in the present invention. The lithium ion conductive inorganic powder is preferably dispersed uniformly in the solid electrolyte with respect to the ion conductive property and mechanical strength of the solid electrolyte. In order to provide a good dispersion property and to make the thickness of the solid electrolyte a desired one, the particle diameter of the lithium ion conductive inorganic powder on the average is preferably not exceeding 20µm, more preferably not exceeding 15µm, and most preferably not exceeding 10µm.

The lithium ion conductive glass ceramic as mentioned above may have the following composition in mol% on the oxide basis:
Li₂O 10-25 mol%,
Al₂O₃ and/or Ga₂O₃ 0.5-15 mol%,
TiO₂ and/or GeO₂ 25-50 mol%,
SiO₂ 0-15 mol%, and
P₂O₅ 26-40 mol%.

The lithium ion conductive glass ceramic is, for example, preferably a glass ceramic to have a main crystal phase of Li_{1+x+y}AlₓTi₂₋ₓSi_{y}P_{3-y}O₁₂ (where 0≤x≤1 and 0≤y≤1) as the base glass having a composition of Li₂O-Al₂O₃-TiO₂- SiO₂-P₂O₅₀ system is heat treated and crystallized. Here, values of x and y are more preferably defined by 0≤x≤0.4 and 0<y≤0.6, and most preferably by 0.1≤x≤0.3 and 0.1≤y≤0.4.

In the following, composition ratios and effects thereof are concretely explained where the composition ratios are represented by mole percent of each component constituting the lithium ion conductive glass ceramic. The Li₂O component is an essential component that provides Li⁺ ion carriers and realizes a lithium ion conductive property. To obtain a good conductivity, the lower content limit of the Li₂O component is preferably 12 mol%, more preferably 13 mol%, and most preferably 14%. The upper content limit of the Li₂O component is preferably 18 mol%, more preferably 17 mol%, and most preferably 16 mol%.

The Al₂O₃ component can increase thermal stability of the base glass, and at the same time, Al³⁺ ions can undergo solid dissolution in the crystal phase to improve the lithium ion conductivity. To realize such effects, the lower content limit of the Al₂O₃ component is preferably 5 mol%, more preferably 5.5 mol%, and most preferably 6 mol%. Since the thermal stability of glass could rather degrade and the ion conductivity of the glass ceramic could also decrease if the content of the Al₂O₃ component exceeds 10 mol%, the upper content limit is preferably 10 mol%. And the upper content limit is more preferably 9.5 mol% and most preferably 9 mol%.

The TiO₂ component contributes to glass formation and constitutes the crystal phase as a component so as to be a useful component in both the glass and crystal phases. In order to obtain a high ion conductivity of the glass ceramic by precipitating the crystal phase as a main phase from the glass phase, the lower content limit is preferably 35 mol%, more preferably 36 mol%, and most preferably 37 mol%. The upper content limit is preferably 45 mol%, more preferably 43 mol%, and most preferably 42 mol%.

The SiO₂ component can improve a fusing property (fusibility) and the thermal stability of the base glass and at the same time, Si⁴⁺ ions undergo solid dissolution in the crystal phase to improve a lithium ion conductivity. To achieve this effect adequately, the lower content limit is preferably 1 mol%, more preferably 2 mol%, and most preferably 3 mol%. However, because the conductivity could rather decrease readily if the content exceeds 10 mol%, the upper content limit is preferably 10 mol%, more preferably set to 8 mol%, and most preferably set to 7 mol%.

The P₂O₅ component is an essential component for glass formation and is also a component of the crystal phase. Because vitrification becomes difficult when the content is less than 30 mol%, the lower content limit is preferably 30 mol%, more preferably 32 mol%, and most preferably 33 mol%. However, because it becomes difficult for the crystal phase to precipitate from the glass such that desired characteristics may not be obtained if the content exceeds 40%, the upper content limit is preferably 40 mol%, more preferably 39 mol%, and most preferably 38 mol%.

With the above-described compositions, it is possible to obtain glass easily by casting fused glass, and glass ceramics having the above-described crystal phase obtained by heat treatment of the glass has a high lithium ion conducting property.

Besides, as long as the glass ceramic has a similar crystal structure, a portion or all of the Al₂O₃ may be replaced by Ga₂O₃ and a portion or all of the TiO₂ may be replaced by GeO₂ as an example composition other than the above compositions. Furthermore, to lower a melting point of the base glass or improve the stability of glass in manufacturing the glass ceramic, other raw materials may be added within a composition range in which the ion conducting property is not largely degraded.

It is preferable that the glass ceramic composition contains no other alkali metal like Na₂O or K₂O than Li₂O if it is possible. When any of these components are present, conduction of Li ions may be inhibited and the ion conductivity may be decreased by an alkali ion mixing effect.

Since the chemical durability and stability of the glass ceramic degrade although improvement of the lithium ion conducting property can be anticipated if sulfur is added to the glass ceramic composition, it is preferable that the glass ceramic composition contains no sulfur if it is possible.

It is preferable that the glass ceramic composition contains none of Pb, As, Cd, Hg, or other components that may be harmful to the environment or the human body if it is possible.

The solid electrolyte according to the present invention can be obtained by baking a green sheet, formed by shaping a mixed slurry of the above-described lithium ion conductive inorganic powder or a powder of the lithium ion conductive glass ceramic or the base glass thereof, etc.; and an organic binder, a plasticizer, a solvent, etc., to a thin plate form by a doctor blade or a calender method, etc.

The positive electrode 14 and the negative electrode 16 are mainly constituted of an active material, an ion conducting aid, and an electron conducting aid. As the active material to be used in the positive electrode 14 and the negative electrode 16, a transition metal compound capable of storing and releasing lithium may be used, and a transition metal oxide, etc., containing at least one element selected from the group consisting of manganese, cobalt, nickel, niobium, and titanium may be used. For example, a lithium manganese complex oxide, manganese dioxide, a lithium nickel complex oxide, a lithium cobalt complex oxide, a lithium nickel cobalt complex oxide, a lithium titanium complex oxide, titanium oxide, niobium oxide, and derivatives thereof may be used. Since many active materials are low in electron conducting property and ion conducting property, it is preferable to add carbon, graphite, carbon fibers, metal powder, metal fibers, etc., having a conducting property as the electron conducting aid. As the ion conducting aid, a glass ceramic, ceramic, etc., having an ion conducting property is also preferably added. When a large amount of the electron and ion conducting aids are added into the electrodes to obtain the above effects, an amount of the active material filled in the electrode decreases relatively and the battery capacity may thereby be lowered. In order to make the amount of the active material filled in the electrodes as much as possible and yet to prevent inhibition of electron and ion transfer, the added amount of the electron and ion conducting aids is preferably in a range of 3 to 35 mass%, more preferably in a range of 4 to 30 mass%, and most preferably in a range of 5 to 25 mass% with respect to the electrode material. Furthermore, the amount of the electron conducting aid is preferably not exceeding 7 mass% in particular.

Here, the positive electrode active material and the negative electrode active material are not in an absolute relationship. That is, upon comparing charging/discharging potentials of two types of metal oxides, the one indicating the more noble potential may be used in the positive electrode and the one indicating the more basic potential may be used in the negative electrode to configure a battery of an arbitrary voltage. When transition metal oxides are used as the positive electrode active material and the negative electrode active material, precipitation of metal lithium does not occur even when the battery is overcharged and the battery is thus improved in reliability.

For the positive electrode 14 or the negative electrode 16, (i) a method of mixing 70 to 90 weight% of an active material powder with 10 to 30 weight% of an acrylic-based resin that is a binder component, dispersing the mixture in water or a solvent having a shaping aid dissolved therein and mixing a plasticizer and a dispersant as necessary to prepare a slurry, and coating and drying the slurry on a base material film and thereafter baking together with the solid electrolyte, or (ii) a method of adding a shaping aid to and granulating a mixture prepared in advance as described above, and thereafter loading into a mold, pressing by a press, and baking, or (iii) a method of processing into a sheet form by pressing by a roll press and thereafter baking together with the solid electrolyte, etc., may be employed.

FIG. 2 is a schematic section view of a solid state battery 10 according to another embodiment of the present invention. Across a layer constituted of a solid electrolyte 12, a positive electrode 14 is disposed on an upper side and a negative electrode 16 is disposed on a lower side.

In respective electrode-electrolyte boundaries, oxides 18 and 20 are disposed in layer form to enable ions, such as lithium ions 26, etc., to pass through during charging or discharging. An aluminum foil is disposed as the current collector 22 on the upper side of the positive electrode, and a copper foil is disposed as the current collector 24 on the lower side of the negative electrode. Besides oxides 18 and 20 being disposed, the configuration is the same as that shown in FIG. 1.

### [Compound containing oxygen or phosphorus]

The compound 18, disposed at the electrode-electrolyte boundary between the positive electrode 14 and the solid electrolyte 12 and containing oxygen or P (phosphorus), is unlikely to react with the electrode material (including the active material) of the positive electrode 14 and with the solid electrolyte 12 and may have an ion conducting property or an ion transmitting property. Compounds containing oxygen may include, for example, oxide and may also include glass ceramic such as those described above. Compounds containing P may include phosphoric acid and phosphoric acid based compounds, etc. Here, "unlikely to react" may signify that even upon pressure molding in a temperature range of 300°C to 100°C and a pressure of 0.1MPa to 1000MPa for 1 minute to 10 hours, a reaction layer is hardly seen. Or, "unlikely to react" may signify that the reaction layer is not exceeding 1 µm in thickness. Because the compound must transmit lithium ions, an ion conductivity thereof is preferably at least 1×10⁻⁴ S·cm⁻¹, more preferably at least 5×10⁻⁴ S·cm⁻¹, and most preferably at least 1×10⁻³ S·cm⁻¹.

The compound 20 containing oxygen or P, disposed at the electrode-electrolyte boundary between the negative electrode 16 and the solid electrolyte 12, is unlikely to react with the electrode material (including the active material) of the negative electrode 16 and with the solid electrolyte 12, and may have an ion conducting property or an ion transmitting property. Because such a compound 20 may have the same or substantially the same composition and properties as the compound 18 described above, details thereof are omitted here.

Although for the sake of convenience, the compounds 18 and 20 are expressed in a flat and layer-like form in FIG. 2, the form is not limited to the flat form and may be in a curved form in the cross section. Also, pores may be opened in the layers of the compounds 18 and 20. However, because a predetermined ion conducting property or ion transmitting property is required between the solid electrolyte 12 and the positive electrode 14 or the negative electrode 16, the compounds preferably have shapes ((both or either of an average and a maximum) thickness, porosity or opening factor) that satisfy this requirement. For example, an average thickness between the solid electrolyte 12 and the positive electrode 14 or the negative electrode 16 is preferably not exceeding 10 µm, more preferably not exceeding 5 µm, and even more preferably not exceeding 1 µm.

Although an example where layers are sandwiched between the electrodes and the electrolyte is described above, the present invention is not limited thereto. For example, when a surface of the positive electrode or negative electrode active material is coated, reactions with the contacting solid electrolyte are suppressed. Thus, by coating the surface of the positive electrode or negative electrode active material by a compound containing oxygen or phosphorus and this is gathered at the electrode-electrolyte boundary, the same effects can be anticipated.

Example 1 will now be described more specifically.

### [Preparation of amorphous oxide glass powder]

As raw materials, H₃PO₄, Al(PO₃)₃, Li₂CO₃, SiO₂, and TiO₂, were used. These were weighed out to provide a composition of 35.0% P₂O₅, 7.5% Al₂O₃, 15.0% Li₂O, 38.0% TiO₂, and 4.5% SiO₂, respectively in mol% as oxide, and mixed uniformly, and thereafter placed in a platinum pot and heated and fused for 3 hours while stirring at a temperature of 1500°C in an electric furnace to obtain a glass melt. The glass melt was thereafter quenched by dripping while heating from a platinum pipe, mounted on the pot, into running water at room temperature to obtain an oxide glass.

When the glass was placed in an electric furnace heated at 1000°C to perform crystallization and then subject to measurement of the lithium ion conductivity, the conductivity was found to be 1.3×10⁻³ Scm⁻¹ at a room temperature. The precipitated crystal phase was measured using a powder X-ray diffraction measurement device to find that the glass ceramic had Li_{1+x+y}AlₓTi₂ₓSi_{y}P_{3-y}O₁₂ (where 0≤x≤0.4 and 0<y≤0.6) as a main crystal phase.

The oxide glass was pulverized by a jet mill, then placed in a ball mill and subject to wet pulverization using ethanol as a solvent to obtain oxide glass powder having an average particle diameter of 0.5 µm.

### [Manufacture of positive electrode green sheet]

Niobium pentoxide powder, manufactured by Kojundo Chemical Laboratory Co., Ltd., was wet pulverized by a ball mill manufactured by Fritsch and adjusted to an average particle diameter of 0.2 µm, and then the niobium pentoxide and the oxide glass were weighed out at a ratio of 80:20 wt% and dispersed and mixed along with an acrylic-based binder and a dispersant in water as a solvent to prepare a positive electrode slurry.

The slurry was decompressed to eliminate bubbles and thereafter shaped using a doctor blade and dried to prepare an electrolyte green sheet having a thickness of 15 µm.

### [Manufacture of electrolyte green sheet]

The oxide glass with the average particle diameter of 0.5 µm was dispersed and mixed along with an acrylic-based binder, a dispersant, and an antifoaming agent in water as the solvent to prepare an electrolyte slurry. The slurry was decompressed to eliminate bubbles and thereafter shaped using a doctor blade and dried to prepare an electrolyte green sheet having a thickness of 30 µm.

### [Manufacture of negative electrode green sheet]

Silicon oxide powder, manufactured by Kojundo Chemical Laboratory Co., Ltd., was wet pulverized by a ball mill and adjusted to an average particle diameter of 0.3 µm, and then dispersed and mixed along with an acrylic-based binder and a dispersant in water as a solvent to prepare a negative electrode slurry. The slurry was decompressed to eliminate bubbles and thereafter shaped using a doctor blade and dried to prepare a negative electrode green sheet having a thickness of 15 µm.

### [Manufacture of battery]

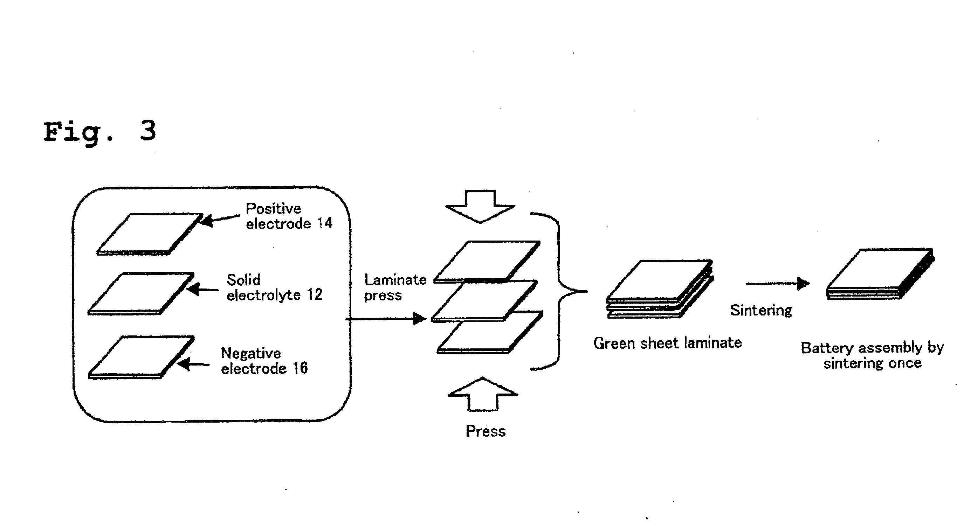

A method for manufacturing a solid state battery assembly related to the present example is illustrated in FIG. 3. First, green sheets of the solid electrolyte 12, the positive electrode 14, and the negative electrode 16 are respectively prepared as described above. Prebaked bodies of the prepared positive electrode and negative electrode green sheets were disposed on respective surfaces of the solid electrolyte green sheet 12, the laminate sheets were pressed and held at a heating temperature of 120 °C for 10 minutes with a hot press, and thereafter cooled to the room temperature. The laminate thus prepared was clamped by a zirconia setter, and sintered at 400 °C for 1 hour and sintered further at 920 °C for 10 minutes in an electric furnace with air inside to prepare a block sintered body of the positive electrode, the solid electrolyte, and the negative electrode. Thereafter, a Li metal foil of 10µm thickness, which was rolled by a roll press, was adhered onto the silicon oxide negative electrode side and the silicon dioxide and Li were made to react by keeping the laminate for 1 week while applying weight in an Ar atmosphere at 50 °C. A water content of the block sintered body was 60ppm. With sintered bodies of the respective electrode green sheets obtained without laminating, the void percentage of the positive electrode was 8% and the void percentage of the negative electrode was 14%. The negative electrode was that in a state before adhesion of the Li metal.

Furthermore, Cu thin films were formed by a sputtering method on both surfaces of the block sintered body to form current collectors. The laminate with current collectors thus obtained was dried under vacuum at 100 °C and thereafter, an Al foil and a Cu foil were set on the positive electrode and the negative electrode as current collector leads, respectively, and sealing in a laminate cell was performed in an Ar atmosphere glove box at a dew point temperature of not higher than -60 °C. The battery was constant current/constant voltage discharged at 1.5V and then constant current/constant voltage charged to 3.0 V again. A discharge capacity obtained at 0.05 mA discharge in a second cycle was a discharge of 390 mAh/g on the basis of the positive electrode active material.

### [Example 2]

Lithium manganate, manufactured by Honjo Chemical Corp., was used as a positive electrode active material. This was dry pulverized by a ball mill to an average particle diameter of 1.3 µm, and the pulverized compound was dispersed and mixed along with an acrylic-based binder and a dispersant in water as a solvent to prepare a positive electrode slurry. The slurry was decompressed to eliminate bubbles and thereafter shaped using a doctor blade and dried to prepare a positive electrode green sheet having a thickness of 12 µm. The silicon oxide, pulverized in Example 1, was used as a negative electrode active material, and the silicon oxide and the oxide glass were weighed out at a ratio of 70:30 wt% and dispersed and mixed along with an acrylic-based binder and a dispersant in water as a solvent to prepare a negative electrode slurry. The slurry was decompressed to eliminate bubbles and thereafter shaped using a doctor blade and dried to prepare a negative electrode green sheet having a thickness of 15 µm.

Using an electrolyte green sheet prepared in the same manner as in Example 1 and the positive electrode green sheet and the negative electrode green sheet prepared as described above, a laminate was prepared in the same manner as in the Example 1. The laminate thus prepared was clamped by a zirconia setter, and sintered at 400 °C for 1 hour and sintered further at 930 °C for 10 minutes in an electric furnace with air inside to prepare a block sintered body of the positive electrode, the solid electrolyte, and the negative electrode. The water content of the block sintered body prepared here was 100 ppm. For a sintered body obtained under the same conditions from the unlaminated positive electrode green sheet, the void percentage was 3 %. Al and Cu were then vapor deposited onto the positive electrode and negative electrode, respectively, of the block sintered body obtained, an Al foil and a Cu foil were set on the positive electrode and the negative electrode as current collector leads, respectively, and sealing in a laminate cell was performed. The battery was constant current/constant voltage charged at 4.4V and then discharged to 3.5V at a discharge current of 0.05mA. The discharge capacity obtained was a discharge of 100mAh/g on basis of the positive electrode active material.

### [Example 3]

Lithium iron phosphate, manufactured by Nihon Alliance Nano Technologies Co., Ltd., was used in a positive electrode. This was wet pulverized by a ball mill to an average particle diameter of 0.5 µm, and thereafter, acetylene black and the pulverized lithium iron phosphate were mixed at a ratio of 99:1 wt%. The powder thus obtained was dispersed and mixed along with an acrylic-based binder and a dispersant in water as a solvent to prepare a positive electrode slurry. The slurry was decompressed to eliminate bubbles and thereafter shaped using a doctor blade and dried to prepare a positive electrode green sheet having a thickness of 13 µm.

For the solid electrolyte sheet, a product of crystallizing oxide glass at 1000 °C was pulverized to an average particle diameter of 0.5 µm, and beside thereafter weighing out and mixing this product with the oxide glass of 0.5 µm average particle diameter at a ratio of 90: 10 wt%, an electrolyte green sheet was prepared in the same manner as in Example 1. Anatase titanium oxide, manufactured by Kojundo Chemical Laboratory Co., Ltd., was used as a negative electrode active material. The titanium oxide was wet pulverized by a ball mill and adjusted to an average particle diameter of 0.15 µm. This titanium oxide was dispersed and mixed along with an acrylic-based binder and a dispersant in water as a solvent to prepare a negative electrode slurry. The slurry was decompressed to eliminate bubbles and thereafter shaped using a continuous roll coater and dried to prepare a negative electrode green sheet having a thickness of 15 µm. The prepared electrolyte green sheet was clamped by a zirconia setter and heated to 400 °C in an electric furnace to remove organic matter, such as the binder, the dispersant, etc., inside the laminate to prepare a prebaked body.

Thereafter, thin films of Fe and Ti were formed at sides of the prebaked green sheet body to be the positive electrode side and the negative electrode, respectively, by an ion plating method. A film of red phosphate powder, dispersed in water, was formed on one surface of each of the positive and negative electrode green sheets by a spin coating method. The positive electrode green sheet, the prebaked electrolyte body, and the negative electrode green sheet thus obtained were then hot pressed in an Ar atmosphere. The obtained laminate was baked in an Ar atmosphere for 5 minutes at 300 °C and then for 1 minute at 550 °C to obtain a block sintered body. The water content of the block sintered body was 70 ppm. With sintered bodies of the respective electrode green sheets obtained without laminating, the void percentage of the positive electrode was 6 % and the void percentage of the negative electrode was 2 %. Films of Fe and Cu were formed by the ion plating method on the positive electrode and the negative electrode, respectively, of the sintered body obtained. Thereafter, SUS304 foils were set on the positive electrode and the negative electrode as current collector leads, and sealing in a laminate cell was performed. This battery was constant current/constant voltage charged at 2.8 V and thereafter discharged at 0.1 mA to a discharge cutoff voltage of 1 V. The discharge capacity obtained was 1550 mAh/g on a positive electrode active material basis.

The solid state battery as described above may be characterized in that the positive electrode active material or the negative electrode active material is a compound containing at least one or more components selected from the group consisting of Li, C, Co, Ni, Mn, Ti, Nb and Si.

Here, a particle diameter (or particle size) is defined as a diameter of a sphere of equivalent sedimentation velocity in a measurement by a sedimentation method or a diameter of a sphere of equivalent scattering characteristics by a laser scattering method. A distribution of the particle diameters is the particle size (particle diameter) distribution. In a particle diameter distribution, a particle diameter at which a total volume of particles greater than the particle diameter takes up 50% of the entire volume of an entire powder is defined as an average particle diameter D50. This is described, for example, in JIS Z8901 "Test Powders and Test Particles," in Chapter 1, etc., of the Society of Powder Technology, Japan ed. "Fundamental Physical Properties of Powders" (ISBN 4-526-05544-1) and other documents. In the present Specification, an integrated frequency distribution according to volume of the particle diameters is measured using laser scattering type measuring devices (LS100 and N5, manufactured by Beckman Coulter, Inc.). A distribution by volume and a distribution by weight are equivalent. The particle diameter corresponding to 50% in the integrated (cumulative) frequency distribution is determined as the average particle diameter D50. In the present specification, the average particle diameter is based on a median value (D50) of the particle size distribution measured by the abovementioned particle size distribution measuring unit based on the laser scattering method.

The solid state battery as described above may further comprise a current collector attached to the negative electrode or the positive electrode. The current collector may contain at least one or more components selected from the group consisting of Si, Sn, Ni, In, Al, Cu, Ti, V, C, Fe, Au, and Pt.

As the current collector, for example, a metal foil of aluminum (Al), nickel (Ni), or copper (Cu), etc., may be utilized.

The solid state battery as described above may be characterized in that the positive electrode active material or the negative electrode active material contains a Li component.

Here, the meaning of containing an Li component may include the meaning of complexing with Li. When the positive electrode active, material or the negative electrode active material, which contains the metal oxide, further contains the Li component, the charging/discharging efficiency can be made higher. This can be achieved, for example, by microparticulating the metal oxide and subjecting it to ultrasonic irradiation in a liquid in which an Li-carrying salt is dissolved or to a solid phase reaction with metal Li.

The solid state battery as described may be characterized by a compound disposed between the solid electrolyte and the positive or negative electrode. The compound contains at least one or more components selected from the group consisting of O, P, and F.

The solid state battery as described above may be characterized in that the compound contains at least one or more components selected from the group consisting of La, Ta, and O.

The solid state battery as described above two paragraphs may be characterized in that the positive electrode active material or the negative electrode active material contains a Li component.

A step is added to include the compound containing O or P at an interface between an electrode active material and the solid electrolyte. However, excessive reaction between the electrode active material and the solid electrolyte can thereby be suppressed more reliably.

The solid state battery as described above may be characterized in that the current collector attached to the negative electrode contains the same material as the current collector attached to the positive electrode contains.

As the current collector attached to the negative electrode contains the same material as the current collector attached to the positive electrode does, an effect of enabling a step of forming a current collector thin film layer to be imparted to an electrode sintered body to be shortened may be achieved.

The solid state battery as described above may be characterized in that at least one of the current collectors contains at least one or more components selected from the group consisting of Cu, Ni, Al, C, Au, and Pt.

As either current collector contains at least one or more components selected from the group consisting of Cu, Ni, Al, C, Au, and Pt, the same effects as those mentioned above can be obtained.

The solid state battery as described above may be characterized in that the solid electrolyte contains a Li component.

As the solid electrolyte contains Li, Li+ ion carriers can be contained inside the electrolyte, thereby readily enabling an effect of improving the lithium ion conducting property.

The solid state battery as described above may be characterized in that the solid electrolyte contains a crystalline of Li_{1+x+z}Mₓ(Ge_{1-y}Ti_{y})₂₋ₓSi_{z}P_{3-z}O₁₂ where 0≤x≤0.8, 0≤y≤1.0, 0≤z≤0.6, and M is at least one kind of Al and Ga.

The solid state battery as described above may be characterized in that the solid electrolyte contains a glass ceramic containing a crystal phase of Li_{1+x+z}Mₓ(Ge_{1-y}Ti_{y})₂₋ₓSi_{z}P_{3-z}O₁₂ where 0≤x≤0.8, 0≤y≤1.0, 0≤z≤0.6, and M is at least one kind of Al and Ga.

The solid state battery as described above may be characterized in that the positive or negative electrode and the solid electrolyte are formed by firing at not higher than 1000 °C.

The solid state battery as described above may be characterized in that the positive or negative electrode and the solid electrolyte are formed by firing at not higher than 600 °C.

The solid state battery as described above may be characterized in that an average water content of the solid electrolyte, the positive electrode, and the negative electrode is not more than 10000 ppm.

Here, as the water content, a weight of a water amount in the dried positive electrode or negative electrode may be expressed in ppm. Specifically, the water content can be measured as: {(Mass of water-containing ion conducting substance to be measured) - (dry mass of ion conducting substance)} / (dry mass of ion conducting substance) × 1000000 [ppm].

Although a battery component material contains water contained in the material and adsorbed water, in relation to battery reactions, in which reactions accompanying transfer of ions and electrons occur inside a solid and at a solid interface, the water contained in a battery undergoes charging and discharging repeatedly and influences degradation of the battery capacity. The lower the water content in the battery, the lower the degradation of capacity, and the water content is preferably 10000 ppm, more preferably 5000 ppm, and most preferably 1000 ppm. It is preferable for the water content to be made as low as possible technically. The water content of a battery can be measured with a Karl-Fischer type coulometric titration water measurement device. In the present Specification, the water content can be determined from water vapor emitted when a battery is heated to 300 °C by MKC-610 manufactured by Kyoto Electronics Manufacturing Co., Ltd.

As described above, with the present invention, by using the metal oxide, which does not react readily with the solid electrolyte, as a material of the active material of the positive electrode or the negative electrode, excessive reaction of the electrode active material and the solid electrolyte in the baking step, etc., can be avoided. Meanwhile, although ion storing and releasing characteristics are unsatisfactory when a metal oxide is contained in the active material, by making the active material have an average particle diameter of no more than 5 µm, the ion storing and releasing characteristics are improved to enable ion conduction to be secured and an adequate battery voltage to be provided.

## Claims

1. A solid state battery comprising:
a solid electrolyte;
a positive electrode containing an active material; and
a negative electrode containing an active material;
wherein:
the solid electrolyte is disposed between the positive electrode and the negative electrode, and
at least one of the positive electrode active material and the negative electrode active material contains a metal oxide, **characterized in that**:
the metal oxide is a compound composed of oxygen and at least one component selected from the group consisting of Co, Ni, Mn,
Nb and Si; and
the metal oxide has an average particle diameter of not exceeding 0.3 µm.

2. The solid state battery according to claim 1 wherein a void percentage of the positive electrode or the negative electrode is not exceeding 35% and the void percentage in volume-% is determined by subtracting from 100 % a proportion in percentage of a volume of material constituting the positive or negative electrode.

3. The solid state battery according to claims 1 or 2 further comprising:
a current collector attached to the negative electrode or the positive electrode wherein the current collector contains at least one component selected from the group consisting of Si, Sn, Ni, In, Al, Cu, Ti, V, C, Fe, Au, and Pt.

4. The solid state battery according to any one of claims 1 to 3 wherein the positive electrode active material or the negative electrode active material contains a Li component.

5. The solid state battery according to any one of claims 1 to 4 comprising: a compound disposed between the solid electrolyte and the positive or negative electrode wherein the compound contains at least one component selected from the group consisting of O, P, and F.

6. The solid state battery according to claim 5 wherein the compound contains at least one component selected from the group consisting of La, Ta, and O.

7. The solid state battery according to claim 5 or 6 wherein the compound contains a P component.

8. The solid state battery according to claim 3 wherein the current collector attached to the negative electrode contains a same material as the current collector attached to the positive electrode contains.

9. The solid state battery according to claim 3 or 8 wherein at least one of the current collectors contains at least one component selected from the group consisting of Cu, Ni, Al, C, Au, and Pt.

10. The solid state battery according to any one of claims 1 to 9 wherein the solid electrolyte contains a Li component.

11. The solid state battery according to any one of claims 1 to 10 wherein the solid electrolyte contains a crystalline of Li_{1+xz}Mₓ(Ge_{1-y}Ti_{y})₂ₓSi_{z}P_{3-z}O₁₂ where 0≤x≤0.8, 0≤y≤1.0, 0≤z≤0.6, and M is at least one kind of Al and Ga.

12. The solid state battery according to any one of claims 1 to 11 wherein the solid electrolyte contains a glass ceramic containing a crystal phase of Li_{1+x+z}Mₓ(Ge_{1-y}Ti_{y})₂₋ₓSi_{z}P_{3-z}O₁₂ where 0≤x≤0.8, 0≤y≤1.0, 0≤z≤0.6, and M is at least one kind of Al and Ga.

13. The solid state battery according to any one of claims 1 to 12 wherein the positive or negative electrode and the solid electrolyte are fired at temperatures not exceeding 1000 °C.

14. The solid state battery according to any one of claims 1 to 12 wherein the positive or negative electrode and the solid electrolyte are fired at temperatures not exceeding 600 °C.

15. The solid state battery according to any one of claims 1 to 14 wherein an average water content of the solid electrolyte, the positive electrode, and the negative electrode is not exceeding 10000 ppm.

## Patentansprüche

1. Feststoffbatterie, umfassend:
einen festen Elektrolyten;
eine positive Elektrode, die ein aktives Material enthält; und
eine negative Elektrode, die ein aktives Material enthält;
wobei:
sich der feste Elektrolyt zwischen der positiven Elektrode und der negativen Elektrode befindet; und
das aktive Material der positiven Elektrode und/oder das aktive Material der negativen Elektrode ein Metalloxid enthält, **dadurch gekennzeichnet,**
**dass**:
das Metalloxid eine Verbindung ist, die aus Sauerstoff und wenigstens einer Komponente besteht, die aus der Gruppe ausgewählt ist, die aus Co, Ni, Mn, Nb und Si besteht; und
das Metalloxid einen mittleren Teilchendurchmesser aufweist, der 0,3 µm nicht übersteigt.

2. Feststoffbatterie gemäß Anspruch 1, wobei der prozentuale Hohlraumanteil der positiven Elektrode oder der negativen Elektrode 35% nicht übersteigt und der prozentuale Hohlraumanteil in Volumen-% dadurch bestimmt wird, dass man einen prozentualen Anteil des Materials, das die positive oder negative Elektrode bildet, von 100% subtrahiert.

3. Feststoffbatterie gemäß Anspruch 1 oder 2, weiterhin umfassend:
einen Stromabnehmer, der an der negativen Elektrode oder der positiven Elektrode befestigt ist, wobei der Stromabnehmer wenigstens eine Komponente enthält, die aus der Gruppe ausgewählt ist, die aus Si, Sn, Ni, In, Al, Cu, Ti, V, C, Fe, Au und Pt besteht.

4. Feststoffbatterie gemäß einem der Ansprüche 1 bis 3, wobei das aktive Material der positiven Elektrode oder das aktive Material der negativen Elektrode eine Li-Komponente enthält.

5. Feststoffbatterie gemäß einem der Ansprüche 1 bis 4, umfassend: eine Verbindung, die sich zwischen dem festen Elektrolyten und der positiven oder negativen Elektrode befindet, wobei die Verbindung wenigstens eine Komponente enthält, die aus der Gruppe ausgewählt ist, die aus O, P und F besteht.

6. Feststoffbatterie gemäß Anspruch 5, wobei die Verbindung wenigstens eine Komponente enthält, die aus der Gruppe ausgewählt ist, die aus La, Ta und O besteht.

7. Feststoffbatterie gemäß Anspruch 5 oder 6, wobei die Verbindung eine P-Komponente enthält.

8. Feststoffbatterie gemäß Anspruch 3, wobei der an der negativen Elektrode befestigte Stromabnehmer dasselbe Material enthält wie der an der positiven Elektrode befestigte Stromabnehmer.

9. Feststoffbatterie gemäß Anspruch 3 oder 8, wobei wenigstens einer der Stromabnehmer wenigstens eine Komponente enthält, die aus der Gruppe ausgewählt ist, die aus Cu, Ni, Al, C, Au und Pt besteht.

10. Feststoffbatterie gemäß einem der Ansprüche 1 bis 9, wobei der feste Elektrolyt eine Li-Komponente enthält.

11. Feststoffbatterie gemäß einem der Ansprüche 1 bis 10, wobei der feste Elektrolyt ein kristallines Material von Li_{1+x+z}Mₓ(Ge_{1-y}Ti_{y})₂₋ₓSi_{z}P_{3-z}O₁₂ enthält, wobei 0 ≤ x ≤ 0,8, 0 ≤ y ≤ 1,0, 0 ≤ z ≤ 0,6 und M = Al und/oder Ga ist.

12. Feststoffbatterie gemäß einem der Ansprüche 1 bis 11, wobei der feste Elektrolyt eine Glaskeramik enthält, die eine Kristallphase von Li_{1+x+z}Mₓ(Ge₁₋yTi_{y})₂₋ₓSi_{z}P_{3-z}O₁₂ enthält, wobei 0 ≤ x ≤ 0,8, 0 ≤ y ≤ 1,0, 0 ≤ z ≤ 0,6 und M = Al und/oder Ga ist.

13. Feststoffbatterie gemäß einem der Ansprüche 1 bis 12, wobei die positive oder negative Elektrode und der feste Elektrolyt bei Temperaturen, die 1000 °C nicht übersteigen, gebrannt werden.

14. Feststoffbatterie gemäß einem der Ansprüche 1 bis 12, wobei die positive oder negative Elektrode und der feste Elektrolyt bei Temperaturen, die 600 °C nicht übersteigen, gebrannt werden.

15. Feststoffbatterie gemäß einem der Ansprüche 1 bis 14, wobei der mittlere Wassergehalt des festen Elektrolyten, der positiven Elektrode und der negativen Elektrode 10 000 ppm nicht übersteigt.

## Revendications

1. Batterie à l'état solide, comprenant :
un électrolyte solide ;
une électrode positive contenant un matériau actif ; et
une électrode négative contenant un matériau actif ;
dans laquelle :
ledit électrolyte solide est situé entre l'électrode positive et l'électrode négative ; et
au moins un desdits matériau actif de l'électrode positive et matériau actif de l'électrode négative contient un oxyde métallique, **caractérisée en ce que** :
ledit oxyde métallique est un composé constitué d'oxygène et d'au moins un composant choisi dans le groupe constitué de Co, Ni, Mn, Nb et Si ; et
ledit oxyde métallique a un diamètre de particule moyen n'excédant pas 0,3 µm.

2. Batterie à l'état solide selon la revendication 1, dans laquelle le pourcentage de vide de l'électrode positive ou de l'électrode négative n'excède pas 35 %, et le pourcentage de vide en pour cent volumique est déterminé par soustraction de 100% de la proportion en pour cent volumique du matériel formant l'électrode positive ou négative.

3. Batterie à l'état solide selon la revendication 1 ou 2, comprenant en outre :
un collecteur de courant attaché à l'électrode négative ou à l'électrode positive, dans laquelle le collecteur de courant contient au moins un composant choisi dans le groupe consistant en Si, Sn, Ni, In, Al, Cu, Ti, V, C, Fe,
Au et Pt.

4. Batterie à l'état solide selon l'une quelconque des revendications 1 à 3, dans laquelle le matériau actif de l'électrode positive ou le matériau actif de l'électrode négative contient un composant Li.

5. Batterie à l'état solide selon l'une quelconque des revendications 1 à 4, comprenant : un composé procuré entre l'électrolyte solide et l'électrode positive ou négative, dans laquelle ledit composé contient au moins un composant choisi dans le groupe consistant en O, P et F.

6. Batterie à l'état solide selon la revendication 5, dans laquelle ledit composé contient au moins un composant choisi dans le groupe consistant en La, Ta et O.

7. Batterie à l'état solide selon la revendication 5 ou 6, dans laquelle ledit composé contient un composant P.

8. Batterie à l'état solide selon la revendication 3, dans laquelle ledit collecteur de courant attaché à l'électrode négative contient le même matériau que le collecteur de courant attaché à l'électrode positive.

9. Batterie à l'état solide selon la revendication 3 ou 8, dans laquelle au moins un desdits collecteurs de courant contient au moins un composant choisi dans le groupe consistant en Cu, Ni, Al, C, Au et Pt.

10. Batterie à l'état solide selon l'une quelconque des revendications 1 à 9, dans laquelle ledit électrolyte solide contient un composant Li.

11. Batterie à l'état solide selon l'une quelconque des revendications 1 à 10, dans laquelle ledit électrolyte solide contient un matériau cristallin de Li_{1+x+z}Mₓ(Ge_{1-y}Ti_{y})₂₋ₓSi_{z}P_{3-z}O₁₂, où 0 ≤ x ≤ 0,8, 0 ≤ y ≤ 1,0, 0 ≤ z ≤ 0,6, et M est Al et/ou Ga.

12. Batterie à l'état solide selon l'une quelconque des revendications 1 à 11, dans laquelle ledit électrolyte solide contient une vitrocéramique contenant une phase cristalline de Li_{i+x+z}Mₓ(Ge_{1-y}Ti_{y})₂₋ₓSi_{z}P_{3-z}O₁₂, où 0 ≤ x ≤ 0,8, 0 ≤ y ≤ 1,0, 0 ≤ z ≤ 0,6, et M est Al et/ou Ga.

13. Batterie à l'état solide selon l'une quelconque des revendications 1 à 12, dans laquelle l'électrode positive ou négative et l'électrolyte solide sont cuits à températures n'excédant pas 1000 °C.

14. Batterie à l'état solide selon l'une quelconque des revendications 1 à 12, dans laquelle l'électrode positive ou négative et l'électrolyte solide sont cuits à températures n'excédant pas 600 °C.

15. Batterie à l'état solide selon l'une quelconque des revendications 1 à 14, dans laquelle la teneur moyenne en eau de l'électrolyte solide, de l'électrode positive et de l'électrode négative n'excède pas 10 000 ppm.
